Europäisches Patentamt

(19) European Patent Office

Office européen des brevets

(11) Publication number : **0 204 212 B1**

# (12) EUROPEAN PATENT SPECIFICATION

(45) Date of publication of patent specification :
**16.01.91 Bulletin 91/03**

(51) Int. Cl.⁵ : **G21C 17/00**

(21) Application number : **86106870.8**

(22) Date of filing : **21.05.86**

(54) **On-line monitoring and analysis of reactor vessel integrity.**

(30) Priority : **04.06.85 US 741088**

(43) Date of publication of application :
**10.12.86 Bulletin 86/50**

(45) Publication of the grant of the patent :
**16.01.91 Bulletin 91/03**

(84) Designated Contracting States :
**BE CH FR GB IT LI SE**

(56) References cited :
**EP-A- 0 088 572**
**EP-A- 0 099 681**
**PATENT ABSTRACTS OF JAPAN, vol. 7, no. 249 (P-234)[1394], 5th November 1983; & JP-A-58 134 313 (MITSUBISHI DENKI K.K.) 10-08-1983**

(73) Proprietor : **WESTINGHOUSE ELECTRIC CORPORATION**
**Westinghouse Building Gateway Center**
**Pittsburgh Pennsylvania 15222 (US)**

(72) Inventor : **Ackerson, D. Scott**
**107 South Walnut Street**
**Westchester Pennsylvania 19382 (US)**
Inventor : **Impink, Albert Joseph, Jr.**
**18 Bel-Aire Road**
**Delmont Pennsylvania 15626 (US)**
Inventor : **Balkey, Kenneth Raymond**
**2007 Hampstead Drive**
**Pittsburgh Pennsylvania 15235 (US)**

(74) Representative : **Modiano, Guido et al**
**MODIANO, JOSIF, PISANTY & STAUB**
**Modiano & Associati Via Meravigli, 16**
**I-20123 Milano (IT)**

Jouve, 18, rue Saint-Denis, 75001 PARIS

## Description

Field of the Invention :

This invention relates to a method and apparatus for monitoring and analyzing on an on-line basis the integrity of fluid containing vessels, and particularly nuclear reactor vessels, during both normal and abnormal fluid temperature and pressure transients. More particularly, the invention is directed to presenting to a plant operator a visual representation of the margin between the reference nil-ductility transition temperatures required for crack initiation and arrest, and the actual nil-ductility transition temperature through the entire thickness of the vessel at selected critical points taking into account, in the case of reactor vessels, the effects of radiation embrittlement. The invention also encompasses techniques for providing accurate determinations of reactor coolant temperature at critical locations in a nuclear reactor pressure vessel,, even during core cooling injections of cold coolant water under stagnant flow conditions.

Description of the Prior Art :

The pressure vessel in which the core of a nuclear reactor is housed is subjected throughout its nominal 40 year life to stresses induced by changes in reactor coolant temperature and pressure. During normal operations, these stresses are of moderate rate and amplitude and have no significant adverse effect on the vessel which is designed with a large safety margin to withstand the expected loading. These normal operations include heat up and cool down where restrictive schedules are rigorously followed to maintain the stresses within prescribed limits.

During some abnormal operations, such as a loss of coolant accident (a LOCA), temperature and/or pressure transients which far exceed those which occur during normal operations may be experienced. Though some abnormal events may not impose serious stresses on the vessel themselves, corrective action taken to alleviate the initial problem, such as injecting cold water into the reactor, may lead to transients which could be a threat to vessel integrity.

The reactor pressure vessel is a cylindrical enclosure with hemispherical ends which is fabricated from steel plates welded along longitudinal and circumferential seams. The upper hemispherical end, or head, is removable for access to the internals. Inlet and outlet nozzles, for each reactor coolant loop, typically 2 to 4 in a pressurized water reactor, are welded into the vessel walls. Typically, it is the welds where flaws are likely to be found which can develop into cracks under the stress induced by large thermal transients. The problem is compounded, in general, by embrittlement of the metal by the neutron radiation to which the vessel is subjected and is of most concern with regard to the welds at the level of the reactor core where the fluence is the highest.

It is necessary for the operator of a nuclear power plant to be constantly aware of the status of the reactor pressure vessel with respect to non-ductile failure. Presently, the operator has two means for obtaining this status : standard heatup/cooldown curves and the recently developed status tree approach. The heatup/cooldown curves define the allowable pressure and temperature domain and are mandated by the Nuclear Regulatory Commission for use during normal startup and shutdown of the reactor. These curves are generated in accordance with Appendix G of Section III of the American Society of Mechanical Engineers Boiler and Pressure Vessel Code (A.S.M.E. code). They can also be utilized during an abnormal event to determine if the temperature and pressure transients remain within the limits established by the curves.The status tree approach, which was developed expressly to assess vessel integrity during pressurized thermal shock events, assumes a step change in temperature to provide a worst case scenerio and through the application of off-line fracture mechanics analysis establishes pressure and temperature boundaries for a particular plant and provides instructions for actions to be taken as the boundaries are approached or exceeded.

Both of these presently available methods of determining vessel integrity status are limited in the following ways : 1) they utilize a quasi-time dependent approach to determining vessel status, when in fact the fracture mechanics problem is a very time dependent function of both vessel temperature and pressure, which requires the introduction of excessive, unquantifiable conservatism into the status information since the operator is not provided with accurate knowledge of the actual margin to flaw initiation in the vessel wall as the plant is stabilized and recovered from a cooldown transient ; 2) both methods use cold leg resistance temperature detector (RTD) temperatures as the indicator of current reactor vessel temperature thereby introducing uncertainties into the measurements, particularly in the event of thermal stratification as a result of safety injection flow under stagnant loop conditions,and rendering the determined status potentially imprecise ; and 3) both methods require operator interpretation of the cooldown history in order to provide a status, which is a time consuming and subjective task that must be performed, at times, under accident conditions.

Under present practice, the U.S. Nuclear Regulatory Commission requires that if the heatup/cooldown curve limits are exceeded during a thermal transient, an analysis must be performed before the reactor can be returned to power to determine whether conditions have occurred which could cause potential flaws to be initiated in the vessel. Such an analysis is performed after the fact and can cause a delay in returning the unit to power where the results indicate that critical conditions were not reached. Of course, if the analysis indicates that critical conditions have existed, then detailed inspections and/or repairs may have to be performed.

In the post event analysis of an abnormal plant transient, data from the event are used to construct temperature and the resulting stress profiles through the vessel at selected critical locations. Through the application of fracture mechanics analysis the stress profile is used to calculate how close the vessel may have come to non-ductile failure. Specifically, the procedure postulates flaws of varying depth at the critical location and calculates for each such flaw the margin between the actual reference nil-ductility transition temperature $RT_{ndt}$ which is a function of the condition of the material and the fluence and the required $RT_{ndt}$ for crack initiation. If $RT_{ndt}$ margins for all of the. postulated flaws meet preset limits, it is assumed that no damage was caused by the transient. Application of such post event fracture mechanics analysis of thermal shock events is discussed in a paper entitled "Method for Fracture Mechanics Analysis of Nuclear Reactor Vessels Under Severe Thermal Transients", by C. B. Buchalet and W. H. Bamford and published by the American Society of Mechanical Engineers, 1975.

It is a primary object of the present invention to provide an accurate, easily understood, on-line, real-time representation of the integrity status of a vessel containing a fluid subject to varying temperature and pressure conditions and especially the pressure vessel of a nuclear reactor.

The invention also achieves improved accuracy in determining the temperature of the reactor coolant adjacent the critical locations in the pressure vessel even during safety injection under stagnant flow conditions ; the invention also realizes the first objective through generation of a display which presents the operator with a real-time visual indication of the current margin to non-ductile failure for selected critical pressure vessel locations.

## SUMMARY OF THE INVENTION

The invention in its broad form comprises a method of on-line monitoring and analysis of integrity against non-ductile failure of a nuclear reactor pressure vessel wall, across a thickness thereof, by temperature measurements in a unit in which reactor coolant in use is circulated along an inner wall of the pressure vessel, as defined in claim 1.

In accordance with a preferred embodiment of the invention, an on-line, real-time fracture mechanics analysis of a vessel containing a fluid subjected to varying temperature and pressure conditions is achieved by monitoring the fluid temperature and pressure and generating therefrom real-time representations of the margin to non-ductile failure at selected critical points in the vessel for all flaw depths of interest through the vessel wall. More particularly, a distribution through the vessel wall of the reference nil-ductility transition temperature ($RT_{ndt}$) required for flaw initiation as a result of transients in the fluid temperature and pressure is generated and displayed together with a distribution of the actual $RT_{ndt}$ to provide a visual comparison of the two parameters. The spacing between the displayed actual $RT_{ndt}$ and required $RT_{ndt}$ distributions provides the visual indication of the margin to non-ductile failure across the entire depth of the vessel wall at each critical location. When the required $RT_{ndt}$ for flaw initiation intersects the actual $RT_{ndt}$ at any depth, indicating conditions for flaw initiation exist, a distribution of the required $RT_{ndt}$ for flaw propagation arrest is generated and displayed along with the required $RT_{ndt}$ for flaw initiation and the actual $RT_{ndt}$ to provide a real-time visual display of the depth at which such a running flaw, if it existed, should terminate. The required $RT_{ndt}$s are generated by generating signals representative of the real time stress intensity factor attributable to transients in the fluid temperature and pressure, and signals representative of the real time fracture initiation toughness, or the arrest toughness as appropriate, and determining the $RT_{ndt}$ at which the stress intensity factor equals the fracture initiation or arrest toughness across the depth of the vessel wall.

As applied to nuclear reactors, the fast neutron fluence is also monitored on a continuous, on-line basis and used in generating the $RT_{ndt}$s to take into account the effects of radiation embrittlement. Any other factors affecting the actual $RT_{ndt}$ of the vessel over time could be similarly monitored and taken into account.

The invention is also directed to providing a more accurate determination of the temperature of the coolant at the critical locations in a reactor pressure vessel. The temperature is measured in the cold leg conduit and at the reactor core inlet, in other words, before and after it circulates past the critical locations in the vessel wall. These temperature readings are taken for each reactor coolant loop and analyzed to determine flow conditions. Readings within preset narrow limits indicate normal forced flow and the two measurements are merely averaged for the best determination of the coolant temperature along the vessel wall. Large differences in the temperature readings at the two locations indicate stagnant flow in the associated loop. Under these conditions, empirically developed conversion factors which relate measured temperature to actual temperature at the vessel wall are applied to the measured temperatures before averaging.

By applying appropriate safety factors to the pressure readings and to the fracture toughness, the invention can be used to provide a visual guide for efficient performance during normal heatup and cooldown events. Should the optimum performance profile be inadvertently exceeded, vessel integrity analysis is immediately available to determine if a threat to vessel integrity was actually posed.

In addition to providing the operator with a clear, unambiguous visual display based upon an in-depth, real time analysis of vessel integrity, recommendations can also be provided to the operator for a suitable response when the analysis determines that vessel integrity was threatened.

The present invention encompasses both method and apparatus for carrying out the above functions.

BRIEF DESCRIPTION OF THE DRAWINGS

A full understanding of the invention can be gained from the following description of a preferred exemplary embodiment to be read in conjunction with the attached drawings in which :

Figure 1 is a schematic diagram of a nuclear reactor coolant system to which the invention has been applied ;

Figure 2 is a vertical section through a nuclear reactor which forms a part of the reactor system depicted in Figure 1 ;

Figure 3 is a diagram illustrating an exemplary distribution of inlet thermocouples in the reactor of Figure 2 ;

Figure 4 is a horizontal section through a combination thimble which forms a part of the reactor of Figure 2 ;

Figures 5 through 8 are flow charts illustrating the operation of the invention in performing on-line monitoring, analysis and recommended operator action functions ;

Figure 9 is a diagram illustrating an example of a display generated by the invention ;

Figure 10 is a diagram illustrating a display similar to that of Figure 9, but under other operating conditions ; and

Figure 11 is a diagram illustrating a display generated by the invention while operating in another mode from that illustrated in Figures 9 and 10.

Description of the Preferred Embodiment

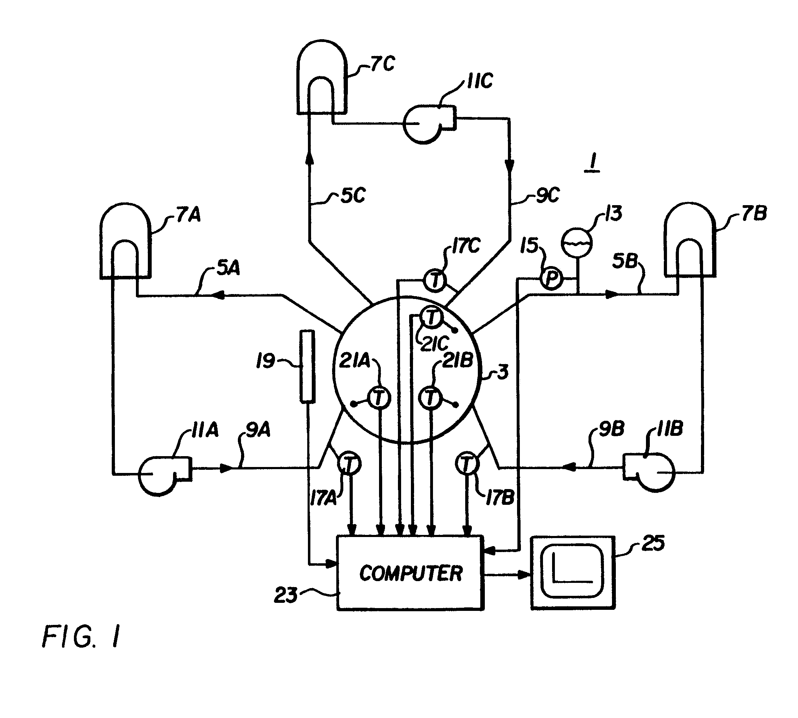

Figure 1 illustrates schematically the application of the invention to the nuclear steam supply system 1 of a pressurized water reactor (PWR), but it is to be understood that the invention can be applied to other reactor systems also and even to other vessels or conduits containing fluid which is subjected to varying temperature and pressure conditions. The system shown in Figure 1 is a three loop PWR which includes a reactor 3 in which fission reactions are promoted at a controlled rate to generate heat energy. Reactor coolant in the form of light water,is circulated through the reactor to absorb that heat generated by the fission reactions and is passed through hot leg conduits 5 in the three loops A, B & C to heat exchangers in the form of steam generators 7 where the heat energy carried by the coolant generates steam in secondary loops (not shown) for use in driving a turbine-generator combination which produces electric power. The coolant is returned to the reactor 3 from the steam generators 7 through cold leg conduits 9A, 9B and 9C by reactor coolant pumps 11A, 11B & 11C. A pressurizer 13 regulates reactor coolant pressure which is typically about $15,51 \times 10^6$Pa [2250 psi] with the reactor at power. The present invention utilizes reactor coolant pressure as measured by pressure transducer 15, cold leg temperatures as measured by resistance temperature detectors 17 and neutron flux as measured by detector 19 all of which form a part of the conventional reactor control, monitoring and protection systems. One aspect of the present invention also utilizes thermocouples 21 which measure reactor core inlet temperatures. All of these measurements are processed by a general purpose digital computer 23 which performs the functions discussed below and generates visual displays for presentation on display device 25. The computer 23 may be the plant computer currently used for monitoring purposes or can be a separate, dedicated unit.

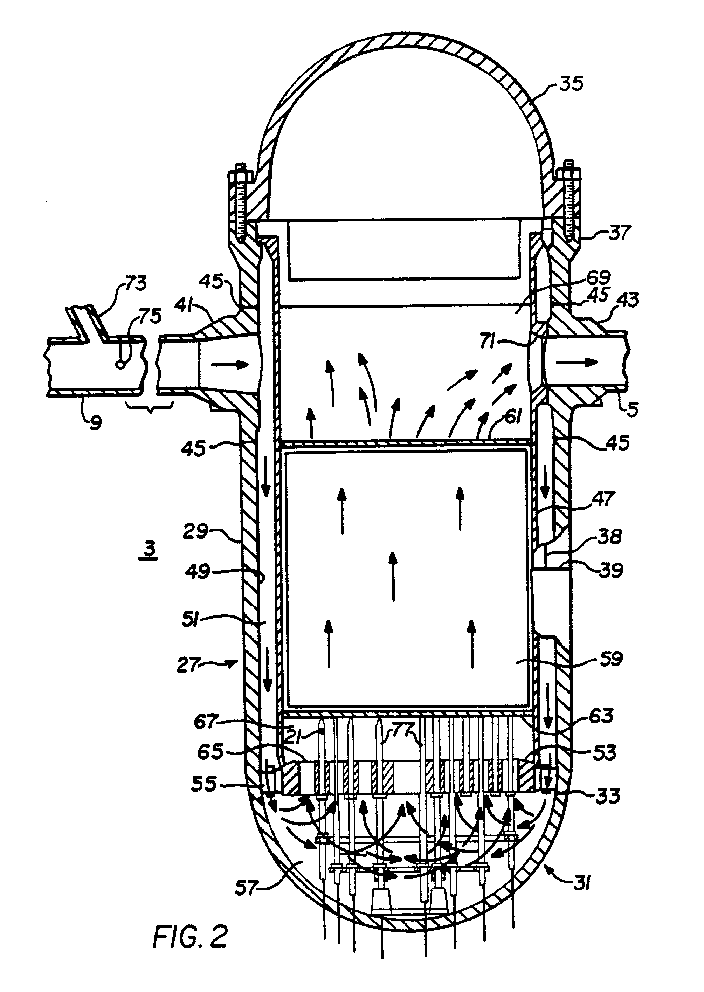

As seen in Figure 2, the reactor 3 of a typical PWR includes a steel pressure vessel 27 with a cylindrical center section 29, a hemispherical lower head section 31 welded at 33 to the center section and a removable, hemispherical head bolted to a flange 37 at the upper end of the center section 29. The cylindrical center section 29 is fabricated from steel plates welded along both longitudinal 38 and circumferential welds 39. An inlet nozzle 41 and outlet nozzle 43 for each loop (only 1 each shown) are welded into the upper region of the center section 29 of the pressure vessel as shown at 45 and are connected to the loop cold leg conduit 9 and hot leg conduit 5 respectively.

A core barrel 47 suspended from the upper flange 37 inside the pressure vessel 27 and spaced radially inward from the inner wall 49 of the vessel forms an annular downcomer 51. The lower end of the core barrel 47 is connected to a lower core support structure 53 which in turn is positioned in the vessel via keys on the lower core support structure and clevis blocks on the vessel wall 49 that form passages 55 through which the downcomer 51 communicates with the interior 57 of the hemispherical lower section 31 of the vessel. A reactor core, shown schematically at 59, is mounted inside the core barrel 47 between upper and lower core support plates 61 and 63 respectively. The lower core support structure 53 has additional apertures 65 through which the interior 57 of the hemispherical lower section 31 of the vessel communicates with a core inlet region 67 below the lower core plate 63. Above the upper core plate 61 is a region 69 in which the reactor control rods and drive mechanisms (not shown) are located. This region 69 is connected to the hot leg conduits 5 by nozzle sections 71 on the core barrel which register with the outlet nozzles 43.

As shown by the arrows in Figure 2, reactor coolant from cold leg conduit 9 enters the pressure vessel through inlet nozzle 41, and circulates along the inner wall 49 of the pressure vessel as it passes downward through downcomer 51. From the downcomer, it passes through passages 55 into region 57 and then upward through apertures 65 into inlet region 67. The reactor coolant then circulates upward through the core 59 where it absorbs the heat generated by fission reactions. The heated coolant passes into the region 69 from which it is discharged into the hot leg conduit 5 of each loop through an outlet nozzle 43.

With the reactor operating at power, the temperature of the reactor coolant returned through the cold leg conduits 9 is typically about 288.6°C [550°F]. Under steady state conditions, the thick walls of the pressure vessel reach a fairly uniform temperature throughout. However, due to the large mass of the pressure vessel, changes in reactor coolant temperature result in variations in the temperature across the thick vessel walls which can be substantial. This temperature gradient creates the stresses which are a function of the magnitude and the rate of the changes in coolant temperature. The stresses in the pressure vessel are also a function of the pressure of the reactor coolant. Under normal operating conditions, the temperature and pressure transients do not generate stresses in the pressure vessel walls which are a threat to vessel integrity. During startup and normal shutdown, the changes in temperature and pressure are regulated to remain within limits set by the NRC so that again, there is no threat to vessel integrity.

Under some abnormal conditions, however, a safety injection system (not shown) injects cold, highly borated reactor coolant into the cold leg conduit 9 through conduit 73 to cool the core 59. The resultant change in the temperature of the coolant circulated along the inner walls of the pressure vessel can create large stresses which are a potential threat to vessel integrity. Generally, in each type of vessel, there are identifiable locations which are most susceptible to non-ductile failure resulting from the stresses generated by severe thermal or pressure transients. These critical locations are typically at a weld location 45, especially the welds adjacent the core 59 where the fluence which causes embrittlement is greatest.

The typical PWR has temperature sensors such as resistance temperature detectors (RTDs) 75 located in the cold leg conduits 9 for measuring reactor coolant temperature for control, monitoring, and protection purposes. Under normal flow conditions, these RTDs provide a reasonably accurate measurement of the temperature of the reactor coolant as it circulates along the inner wall 49 of the pressure vessel for most purposes. However, in accordance with the present invention which provides the capability of making a more precise determination of the margin to non-ductile failure in a pressure vessel under thermal shock transients, a more accurate determination of the temperature of the reactor in the downcomer 51 is desirable.

PWRs are typically provided with instrumentation thimbles or guide tubes 77 which extend upward through the reactor core from below to provide access in the core for fixed or movable sensors such as neutron flux detectors. In accordance with the invention, the thermocouples 21 are installed in some of these thimbles in the core inlet area 67 below the lower core plate 63 which protects them from excessive radiation emitted by the reactor core 59. These thermocouples provide an accurate measure of the temperature of the reactor coolant in this area.

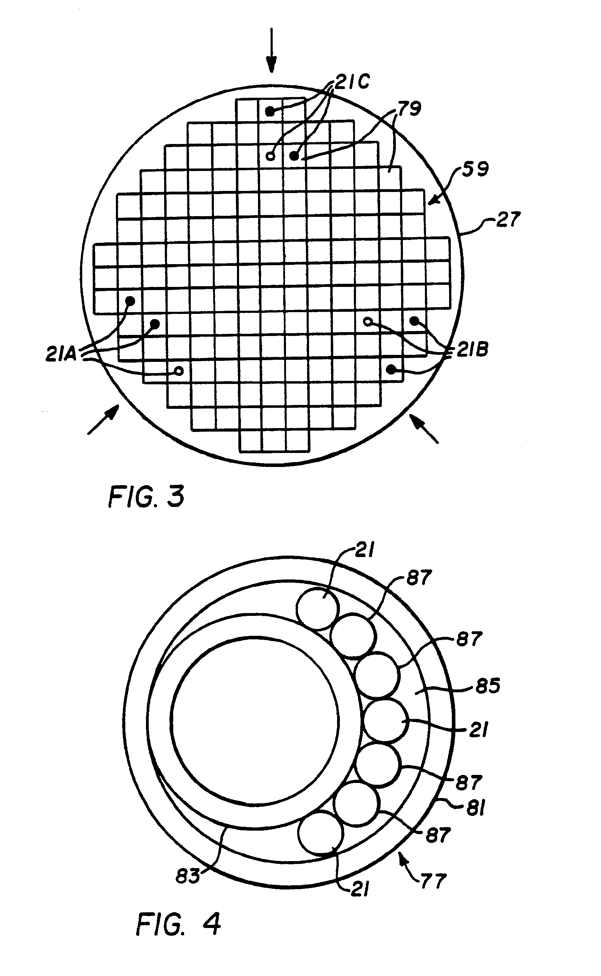

Figure 3 is a plan view illustrating a suitable arrangement of thermocouples 21 according to the invention in certain fuel cells 79 which make up the core 59 of a typical 3 loop PWR. Instrumentation thimbles are not provided in every fuel cell, but are distributed across the core in a pattern which provides representative flux measurements. Representative reactor coolant temperature measurements are obtained by locating thermocouples in thimbles at the locations shown by the reference character 21 with the appropriate loop suffix. The solid dots indicate exemplary locations for redundant thermocouple measurement points for each loop while the open circle indicates a suitable location for the third measurement point for each loop when increased reliability is desired. As indicated, the thermocouples for each loop are in substantial vertical alignment with the inlet nozzle for the associated loop each of which is represented in Figure 3 by a radial arrow.

Figure 4 illustrates a combination in-core instrumentation thimble 77 suitable for use with the invention. Such a thimble includes an outer tube 81 and an eccentrically mounted inner tube 83 in which a movable in-core neutron flux detector (not shown) is received. Redundant (3 shown) inlet thermocouple leads 21 are inserted in the space 85 between the inner and outer tubes along with a number of core outlet thermocouple leads 87 presently provided to measure the temperature of the reactor coolant as it leaves the core.

In accordance with the teachings of the invention, the thermocouple readings taken in the core inlet area are used in conjunction with the temperature measurements made by the RTDs in the cold leg conduit to provide a more accurate determination of the temperature of the reactor coolant in the downcomer. Under normal flow conditions, the temperatures at these two locations, before and after the coolant passes through the downcomer, do not differ appreciably and the two readings are averaged to determine the temperature of the coolant to which the pressure vessel walls 49 are exposed. This remains true during safety injection of cold borated water into the cold leg conduits as long as the reactor coolant pumps are still operating to effect mixing of the warm coolant circulating in the loop and the cold injection water. However, during the course of some abnormal events, the normal flow of reactor coolant in one or more loops stops, or is terminated by the operator in responding to the initial event. Cold water injected into a cold leg conduit under these stagnant flow conditions may tend to stratify so that the RTD temperature readings are not necessarily representative of the temperature of the coolant circulating along the inner wall 49 of the pressure vessel. The pattern of stratification under stagnant flow conditions remains reasonably consistent so that conversion factors for converting both the RTD and inlet thermocouple temperature readings to downcomer temperatures can be determined empirically for each reactor design. The more accurate measurement of the temperature of the coolant flowing along the inner wall of the vessel available with this technique reduces the need for conservatism in the analysis of vessel integrity thereby increasing the operating margin of the reactor.

In accordance with the invention then, one or more critical locations in the vessel are selected from the design of the pressure vessel for monitoring. As mentioned previously, these critical locations most likely are found at the welds and especially the welds adjacent the reactor core where the fast neutron fluence is highest resulting in the most severe embrittlement of the weld material. Typically, one to several critical locations are chosen for monitoring. The physical characteristics of each of these locations, including the geometry, the thermal properties, and the copper and nickel content, are provided to the computer. The neutron flux is monitored and integrated with time to measure the fluence at each critical location. The temperature of the reactor coolant for each of the critical locations is determined continually from the RTDs and the inlet thermocouples with appropriate conversion factors for stagnant flow if applicable. These temperatures, along with on-line reactor coolant pressure measurements, and the fluence measurements are utilized to make an on-line, real time analysis of the vessel integrity at the critical locations using fracture analysis. Such an analysis is made automatically when the rate of change in temperature and pressure indicate an abnormal condition. During heatup and cooldown, compliance with Appendix G criteria established by Section III of the A.S.M.E. code previously mentioned is monitored and if compromised, an immediate analysis is made to determine how close the vessel may have come to non-ductile failure.

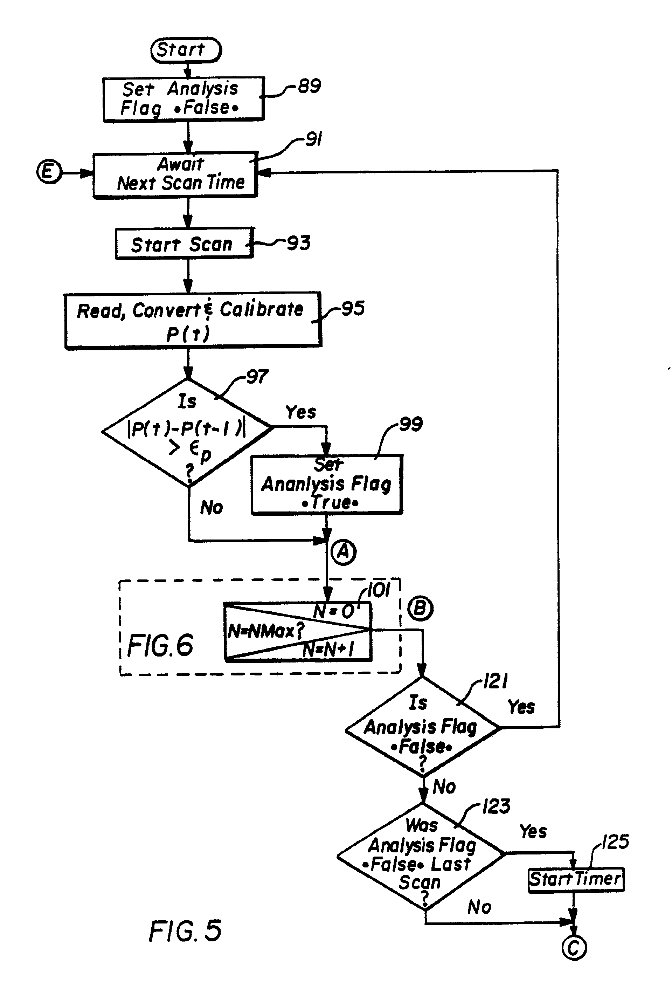

A more detailed explanation of the operation of the invention can be gained from the flow diagrams of Figures 5 through 8 which set forth the programs carried out by the digital computer 23 in gathering the data from the plant and performing the on-line, real time analysis of the vessel integrity. Initially, as shown in block 89 in Figure 5, a flag which indicates whether or not a pressure and/or temperature transient of sufficient magnitude is in progress to necessitate a vessel integrity analysis is set equal to FALSE. The program then awaits the next scan time in block 91. The scan interval is selected taking into account the severity of possible abnormal events and the time required for an appropriate response. A suitable interval is about 1 to 2 minutes. When a scan is started in block 93, the current reactor coolant pressure, P(t), as measured by the transducer 15, is read, converted to engineering units and calibrated in block 95. If this current pressure reading exceeds the reading recorded on the last scan, as determined in block 97, by an amount, $e_p$, indicative of a potentially significant pressure transient, the analysis flag is set to TRUE in block 99. By way of example, a change of about $51,724 \times 10^3 Pa$ [75 psi] can be selected as the trigger point for an analysis based on a pressure transient.

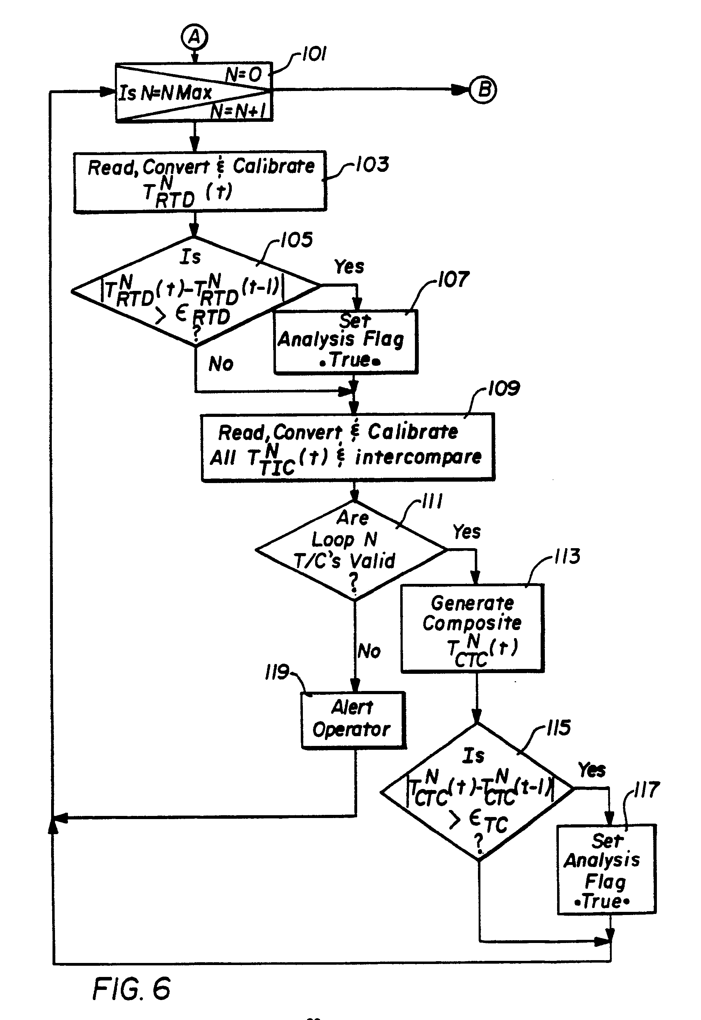

After the pressure has been checked, the temperature of the coolant in each reactor coolant loop is determined sequentially in a program loop which is entered at block 101. In this program loop, which is shown in Figure 6, the temperature of the reactor coolant in the cold leg conduit as measured by the resistance temperature detectors, RTDs, is read, converted to engineering units, and calibrated in block 103. Typically, redundant RTDs are provided in each cold leg, and other parts of the plant, which already use these temperature measurements for other purposes, check the individual signals for validity and provide a composite reading for the loop. This value of the cold leg temperature is compared with the value stored from the previous scan in block 105, and if it differs by a preselected value, for example 2,7°C [5°F], indicating a significant transient which requires analysis, the analysis flag is made TRUE in block 107. Next, each of the redundant inlet thermocouple signals for the loop are read, converted to engineering units, calibrated and intercompared with each other in block 109. If this intercomparison shows the readings to be valid as determined in block 111, a composite thermocouple signal for the loop is generated in block 113, as by averaging and this composite value is compared with the corresponding value on the previous scan in block 115. If the current value differs from the previous value by more than a preselected amount, again, an exemplary value is about 2,7°C [5°F] for a scan interval of one to two minutes, the analysis flag is set to TRUE in block 117. The program then loops back to block 101 and checks the temperature readings for the next reactor coolant loop, N. If the thermocouple readings are not valid, the operator is alerted in block 119 before the next reactor coolant loop is analyzed.

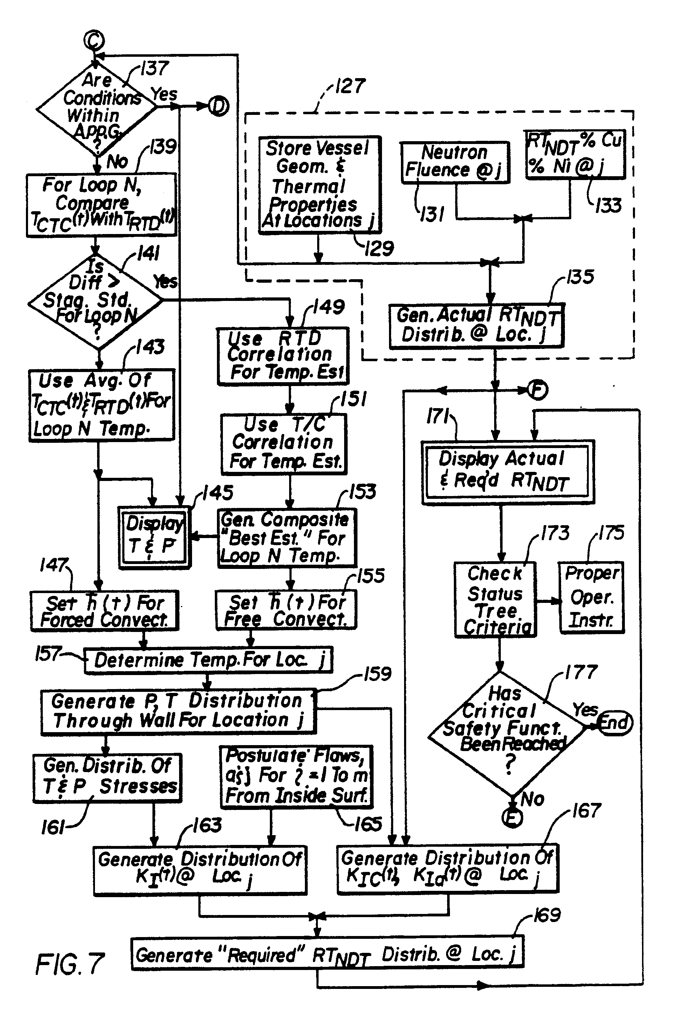

When all of the reactor coolant loop temperatures have been processed, the program proceeds by way of tag B back to Figure 5 where the analysis flag is checked in block 121. If the pressure and all the loop temperatures are within limits, the program returns to block 91 and awaits the next scan. If an analysis is required, however, an event timer is started on the initial scan in which the transient is detected as carried out in blocks 123 and 125, and the program then proceeds to Figure 7 as indicated by the tag C.

In carrying out the analysis function, the signals representative of the "on line" plant specific vessel and material properties are generated and/or stored as indicated generally by reference character 127 in Figure 7. This includes storing vessel geometric and thermal properties for each of the critical locations, j, of the, vessel in block 129. It also includes generating the fast neutron fluence at each location j, as shown by block 131. The fluence can be calculated, for instance, by multiplying an effective full power hour signal available from the plant computer by a stored neutron flux rate signal for each critical location. Alternatively, if the local neutron flux is available at the locations j, it can be integrated with time to determine the current fast neutron fluence. The stored plant specific values also include, for each critical location j, the initial reference nil-ductility transition temperature, $°RT_{ndt}$, and the percent copper and nickel content of the steel. From these parameters, signals representative of the real time, actual $RT_{ndt}$ distribution through the wall at each location j are generated in block 135 by continually updating the $RT_{ndt}$ distribution taking into account embrittlement resulting from the fast neutron fluence.

The "on-line" plant specific vessel and material properties signals are also utilized in the generation of the required $RT_{ndt}$ signals. First, a determination is made in block 137 whether the reactor coolant pressure and temperature conditions are within the limits set by Appendix G of Section III of the A.S.M.E. code for heatup and cooldown. If they are not, indicating an abnormal transient, a determination is made in block 139 and 141 for each reactor coolant loop, whether the coolant is being circulated by the reactor coolant pump or by natural circulation, or whether the flow is stagnant. If the composite thermocouple signal and the associated RTD signal for a given loop differ by less than a preselected amount, forced flow conditions are assumed to exist and the thermocouple and RTD signals are averaged in block 143 to provide the indication of the temperature of the reactor coolant circulating along the inner wall of the reactor vessel, and this temperature is displayed to the operator as indicated in block 145. In addition, the heat transfer coefficient, h(t), is set for forced convection in block 147.

When stagnant flow conditions are detected in block 141 for a given loop, the RTD temperature and an empirically established RTD correlation factor are used to estimate the reactor coolant temperature in the downcomer. Alternatively, or in addition, an estimate of the downcomer temperature can be derived from the composite inlet thermocouple temperature and the empirically established thermocouple correlation factor as indicated in block 151. Where both correlations are used, a "best estimate" for the reactor coolant temperature in the downcomer is calculated in block 153 as the average of the two estimated temperatures. This reactor coolant temperature for stagnant flow conditions is displayed to the operator as indicated in block 145 and the heat transfer coefficient is set for free convection in block 155.

Next the temperature of the reactor coolant at critical location j is determined in block 157 using the appropriate reactor coolant loop temperature and the existing flow conditions. This temperature and the measured reactor coolant pressure are then utilized to perform a real time fracture analysis of the vessel at each critical location. First, the reactor coolant temperature at location j and the heat transfer coefficient, h(t), together with the vessel specific properties, are used in block 159 to generate a real time temperature distribution through the vessel wall at location j. A similar distribution of pressure through the wall at location j is also generated in block 159. The temperature and pressure distributions are then used in block 161 to generate a distribution through the vessel wall of real time thermal and pressure stress at location j.

Next, a distribution of the real time stress intensity factor, $K_I(t)$, at location j is derived in block 163 from the thermal and pressure stress distribution generated in block 161 and by postulating in block 165 a sequence, i, of flaws of varying depth, a, extending from the inner surface of the vessel wall outward at location j. By way of example, a series of 25 flaws (i=1 to 25) at successively increasing depths across the vessel wall at location j can be postulated. This stress intensity factor, $K_I(t)$, is a measure of the driving force that the stress created by the change in reactor coolant temperature and/or pressure imposes on a postulated flaw in the vessel wall. The distribution of $K_I(t)$, for the postulated flaws, provides a real time representation of the stress intensity for flaws of all depths across the vessel wall.

The temperature distribution through the vessel wall generated in block 159, is used along with the "actual" $RT_{ndt}$ distribution generated in block 135, to generate in block 167 a distribution or profile of the fracture initiation toughness $K_{IC}(t)$, through the vessel wall at location j. This fracture initiation toughness is a measure of the resistance of the vessel wall to flaw initiation. The techniques for generating the pressure and temperature distributions through the vessel wall, and the resultant thermal and pressure stress distribution, as well as those for determining the stress intensity factor distribution and the fracture toughness distribution, are known in the art. For instance, reference may be had to a paper entitled "Method for Fracture Mechanics Analysis of Nuclear Reactor Vessels Under Severe Thermal Transients", by C. B. Buchalet and W. H. Bamford and published by the American Society of Mechanical Engineers, 1975.

The stress intensity factor distribution and fracture initiation toughness distribution are then used in block 169 to generate a "required" $RT_{ndt}$ distribution for the location j. This is achieved by determining for each postulated flaw depth, the value of $RT_{ndt}$ that would be required to make the fracture toughness, $K_{IC}(t)$, equal to the stress intensity factor, $K_I(t)$ Since the stress intensity factor is a real time parameter determined as a function of the current and recent values of the reactor coolant temperature and pressure, the required $RT_{ndt}$ represents the value that the $RT_{ndt}$ for the material at location j would have to be in order for the current conditions to cause a flaw to propagate.

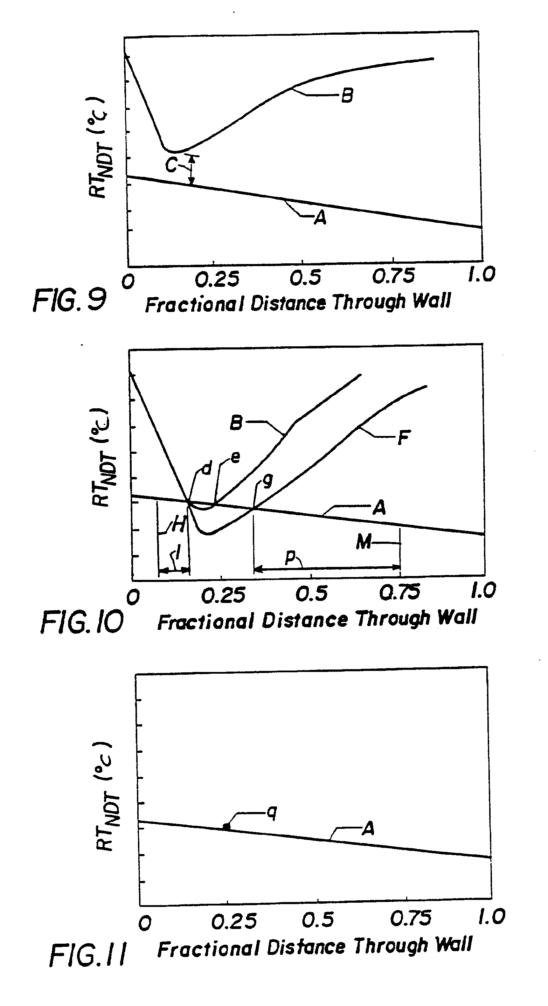

By comparing the required $RT_{ndt}$ with the actual $RT_{ndt}$ previously calculated, a determination can be made as to whether the transient has created conditions under which a flaw could propagate. The preferred manner of making this comparison is to generate a visual display of the required and actual $RT_{ndt}$s as indicated in block 171 of Figure 7. Typical displays generated in this manner are shown in Figures 9 and 10. The trace A represents the actual $RT_{ndt}$ of the material through the vessel wall at location j. The actual $RT_{ndt}$ for practical purposes remains constant throughout a transient. Radiation embrittlement causes the actual $RT_{ndt}$ trace to creep upward over an extended portion of the typical 40 year life of the vessel. The trace B in Figure 9 is the required $RT_{ndt}$ for flaw initiation. For the instant during a transient represented by Figure 9, a margin C exists between the required and actual $RT_{ndt}$.

Figure 10 illustrates an instant in a transient when the required $RT_{ndt}$ flaw initiation trace B projects below a portion of the actual $RT_{ndt}$ trace A. The required $RT_{ndt}$ becomes equal to the actual $RT_{ndt}$ at point, d, approximately 0.15 of the fractional distance through the wall for the conditions exemplified, and remains less than the actual $RT_{ndt}$ until the point, e, approximately 0.20 of the way through the wall. These conditions indicate that any flaw which extended from the inner surface of the vessel wall to a depth between points d and e would propagate as a result of the stresses induced by the transient. Flaws of lesser or greater depth would not propagate under the stresses present at the displayed instant.

There is a theory discussed in the above cited ASME paper that a running crack in a material subjected to a stress field will arrest when the stress intensity factor becomes smaller than a property identified as the arrest fracture toughness, $K_{Ia}(t)$. Thus, when the required $Rt_{ndt}$ falls below a portion of the actual $RT_{ndt}$ profile, as it does in Figure 10, an arrest fracture toughness distribution at location j is generated in block 167 in addition to the flaw initiation fracture toughness distribution. A "required" $RT_{ndt}$ distribution for flaw arrest is then generated in block 169 using the stress intensity factor distribution and this arrest fracture toughness distribution in the same manner as the flaw initiation required $RT_{ndt}$ distribution is generated. This required $RT_{ndt}$ for flaw arrest is then presented on the operator's display as trace F as shown in Figure 10. As shown in the example, the required $RT_{ndt}$ for arrest rises above the actual $RT_{ndt}$ at point g which is about 0.28 of the distance through the vessel wall. Thus, should a flaw exist which extends to a depth between points d and e, it will propagate to a depth represented by point g before it will arrest since the $RT_{ndt}$ for flaw initiation rises above the actual $RT_{ndt}$ at point e.

This visual display provides the operator with a very powerful tool for monitoring and, if necessary, controlling conditions which affect the integrity of the reactor pressure vessel. For instance, by monitoring the display under the conditions shown in Figure 9, the operator can observe what the margin to flaw initiation is. By observing successive displays, which may be stored for rapid playback, the operator can learn how fast the margin is changing and guage whether flaw initiation conditions are likely to occur. If flaw initiation conditions should occur, the display of Figure 10 provides the operator with information on the depth of a flaw that must be present for flaw propagation and the depth that it would likely propagate to before arrest.

The display can also be used to provide additional information about vessel integrity. For instance, as can be seen from the required $RT_{ndt}$ curves, the stress caused by a thermal shock event must be very high to initiate propagation of a flaw extending only a short distance in from the inner surface of the vessel wall. Thus, minor flaws at the surface can be tolerated. It is also a factor that inspection techniques can only reliably detect flaws which penetrate beyond a certain minimum depth. Accordingly, minimum flaw initiation acceptance criteria can be established and presented on the display as a trace, H, as shown in Figure 10. A margin, $\ell$, may then be observed on the display between the minimum depth, d, at which flaw initiation would occur under existing conditions and the minimum acceptance criteria. Thus, even though the required $RT_{ndt}$ for flaw initiation drops below the actual $RT_{ndt}$, as long as there were no flaws which exceeded the minimum criteria for flaw initiation and as long as the margin, $\ell$, is large enough, it can reliably be concluded that no damage has been done to the vessel.

In addition, for safety reasons a maximum depth at which a flaw must be arrested to avoid catastrophic failure can also be established, and a trace, M, may be presented on the display at this point as shown in Figure 10. The display then also provides a visual indication of a margin, p, between the maximum flaw arrest depth which occurs at point g and the acceptance criteria for vessel failure as represented by the trace M. Thus, even if a flaw propagated, as long as the margin to the maximum flaw arrest depth is large enough, it can be reliably determined that catastrophic failure is not a threat.

As a further feature of the invention, recommendations for action to be taken by the operator to alleviate the situation where there is a threat, or an imminent threat, to vessel integrity can be provided automatically. As part of this feature, indications can be provided in association with the display as to the seriousness of the threat such as, for example, by color coding, special indicia, flashing video, audio signals or any combination of these or other indications. For instance, the required $RT_{ndt}$ trace B may be in a region coded green when there is no imminent threat, orange when the margin C falls below a preset value, and red when it intersects the actual $RT_{ndt}$ trace A. This color coding can be associated with a set of instructions designed to guide the operator through steps to be taken to modify conditions so as to reduce the threat to vessel integrity. Since there are a large number of interacting variables in a complex system such as a nuclear reactor, the instructions can best be presented in status tree form which can be designed to take into account the dynamic effects of each corrective measure to assure that other critical functions are not adversely affected. Such a system for status tree analysis is disclosed in commonly owned U.S. patent 4,552,718 (EPC publication 0099681) and entitled "Method and Apparatus for On-Line Monitoring of the Operation of a Complex Non-Linear Process Control System". As shown in blocks 173 and 175 in Figure 7, the status tree criteria and the recommended instructions are presented to the operator.

When an abnormal event occurs in a nuclear reactor, the object is to satisfy a series of well defined critical safety functions which return the reactor to normal operation, or place it in a safe shutdown mode. For example, in a loss of coolant accident, the object is to stabilize the reactor at a safe temperature. Accordingly, following the check of the status tree criteria in Figure 7, a determination is made in block 177 whether or not the critical safety function for the particular event which has occurred has been reached. If not, the program returns, as indicated by tag E, to block 91 in Figure 5 to await the next scan. If the critical safety function has been satisfied, the program ends, until another event occurs and the program is restarted in Figure 5 at block 89.

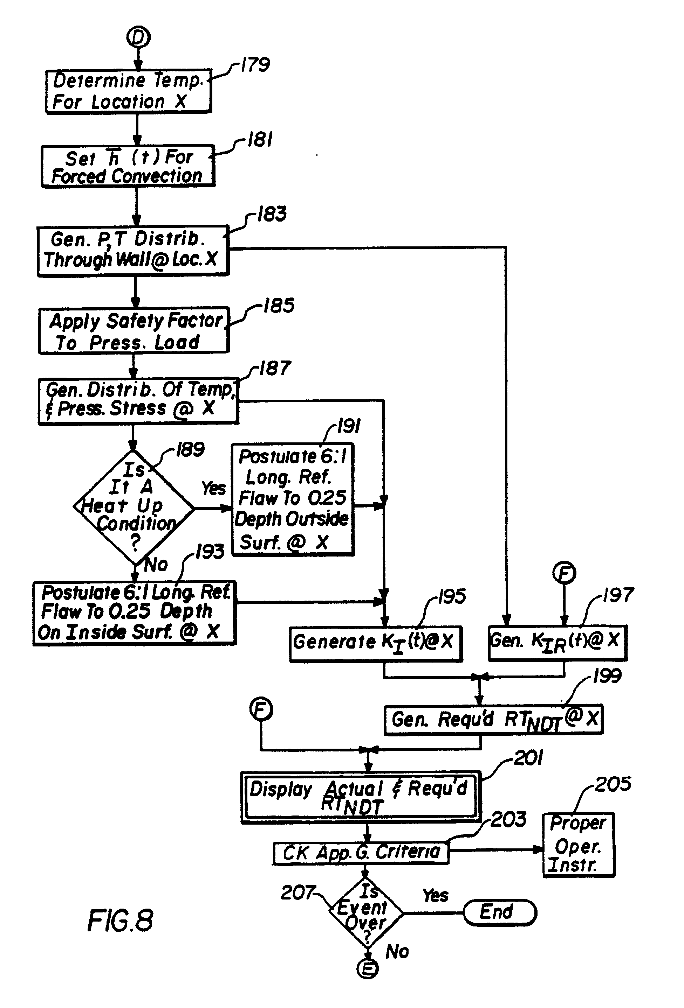

The invention may also be used for monitoring and analysis during normal plant heatup and cooldown. These conditions are detected in block 137 of Figure 7 by a determination that the temperature and pressure transients are within the Appendix G criteria. The actual reactor coolant temperature and pressure readings are displayed to the operator in block 145 as in the case of an abnormal thermal shock event. As indicated by tag D, a determination is then made in block 179 of Figure 8 of the reactor coolant temperature for the critical location x chosen for monitoring and analysis during the heatup or cooldown transient. Generation of a signal representative of this temperature is accomplished in the same manner as previously described for full flow conditions. Next the heat transfer coefficient, h, is set for forced convection in block 181 for use in generation of the pressure and temperature distributions through the vessel wall at location x as indicated in block 183. As required by Appendix G Section III of the A.S.M.E. code, a safety factor of two is applied to the pressure load in block 185 before a temperature and pressure stress distribution at location x is generated in block 187.

If it is determined in block 189 that a heatup condition exists, a longitudinal reference flaw to a fractional depth of 0.25 of the wall thickness with an aspect ratio of 6 :1 (length to depth) is postulated on the outside surface of the vessel as indicated in block 191. On the otherhand, for cooldown conditions, a similar flaw is postulated in block 193 on the inner surface of the vessel. The appropriate flaw is used in block 195 together with the temperature and pressure stress to generate a stress intensity factor, $K_I(t)$, for the postulated flaw. The actual $RT_{ndt}$ from block 135 in Figure 7 is applied through tag F to block 197 along with the temperature from block 183 to generate a reference fracture toughness, $K_{IR}(t)$, which includes a second safety factor. The required $RT_{ndt}$ which makes $K_I(t)$ equal to $K_{IR}(t)$ is then determined in block 199. This required $RT_{ndt}$ is displayed with the actual $RT_{ndt}$ also received through tag F as indicated in block 201. Figure 11 illustrates an exemplary display for a cooldown event. Since, as is mandated, only a flaw at 0.25 depth was postulated in generating this display, a single dot, Q, appears as the required $RT_{ndt}$. The object during heatup and cooldown is to keep the required $RT_{ndt}$, trace Q, on the actual $RT_{ndt}$, trace A, for optimum conditions. The fact that the required $RT_{ndt}$ equals the actual value at 0.25 depth does not indicate that a flaw of that depth would propagate because of the safety factors applied to the pressure load and incorporated into the calculation of fracture toughness $K_{IR}(t)$. In fact, the actual margin should be similar to that shown in Figure 9. If during heatup or cooldown, the Q trace dips below the A trace, the operator can switch to the analysis mode to generate a display similar to that of Figure 9 where the actual margin can be observed.

As in the case of an abnormal thermal shock event, Appendix G criteria can be checked in block 203, and instructions as necessary may be presented to the operator in block 205. For instance, if conditions indicate that the heatup or cooldown event is entering a caution status, it could be recommended to the operator to switch to abnormal thermal shock event analysis where the event can be monitored more closely while corrective action is being taken.

From the above description, it can be appreciated that the present invention not only monitors the temperature and pressure during a thermal shock event, but provides an on-line analysis of the effects of these transients on vessel integrity and presents recommendations to the operator of steps to be taken to alleviate their effects. It can also be used to maintain an optimum profile during heatup and cooldown, and could even be used, if desired, to generate conventional heatup and cooldown curves, as defined in Appendix G of the A.S.M.E. code. The invention can also immediately provide the detailed fracture mechanics results for assessment following an abnormal event such that appropriate authorities can determine if the reactor vessel can be safely returned to normal operation. Where technical features mentioned in any claim are followed by reference signs, those reference signs have been included just for the sole purpose of increasing intelligibility of the claims and accordingly, such reference signs do not have any limiting effect on the scope of each element identified by way of example by such reference signs.

## Claims

1. A method of on-line monitoring and analysis of integrity against non-ductile failure of a nuclear reactor pressure vessel wall, across a thickness thereof, by temperature measurements in a unit in which reactor coolant in use in circulated along an inner wall of the pressure vessel, said method comprising the steps of :
   – generating signals representative of the measured temperature of the reactor coolant on an on-line basis wherein the step of generating temperature signals comprises measuring the reactor coolant temperature at a point spaced from the selected critical points in the vessel wall,
   – generating signals representative of the measured pressure of the reactor coolant on an on-line basis,
   – storing conversion factors for converting the measured temperature to an actual coolant temperature at said selected critical points under stagnant flow condition of the reactor coolant,
   – generating temperature signals for said selected critical points by applying the appropriate conversion factor to said measured temperature under stagnant flow conditions,
   – generating further temperature signals from the temperature measurements without the conversion factors otherwise, and
   – generating on an on-line basis as function of changes in said temperature signals, said further temperature signals and said pressure, of a visual representation of a margin to non-ductile failure of the vessel at said selected critical points for all flaw depths through the thickness of the vessel wall.

2. The method of claim 1 characterized in that the method includes the steps of measuring the reactor coolant temperature at a first location before the reactor coolant is circulated along the inner wall of the pressure vessel and at a second location after the reactor coolant has circulated along the inner wall of the pressure vessel, comparing the temperature measurements at said two locations and applying said appropriate conversion factors to at least one of said temperature measurements to generate said temperature signals when the two measurements differ by a preselected amount indicative of stagnant flow conditions.

3. The method of claim 2 characterized in that the reactor includes a reactor core inside the pressure vessel with a core inlet at the bottom thereof and a cold leg conduit through which reactor coolant enters the pressure vessel near the top of the reactor -core, circulates down along the inner wall of the pressure vessel and passes through the core inlet into the core, and wherein said first temperature measurement is taken in said cold leg conduit and the second temperature measurement is taken at the core inlet.

4. The method of claim 3 characterized in that said temperature signals are generated from the average between the first and second temperature measurements when said measurements differ by less than said preselected amount.

5. The method of claim 3 characterized in that said reactor has a plurality of reactor coolant loops each including a cold leg conduit and wherein said method includes taking a first temperature measurement for each loop in the associated cold leg conduit and taking a second temperature measurement for each loop at the core inlet under the associated cold leg conduit and wherein said method further includes the step of preselecting the temperature measurements for generating the temperature signal for a selected critical point from the loop which has the greatest affect on the temperature at the selected point.

6. A method as in claim 1, wherein said step of generating temperature signals for said critical points comprises :
   generating a signal representative of fast neutron fluence to which the reactor pressure vessel has been subjected ;
   generating as a function of said fluence signal a visual representation of the actual real time reference nil-ductility transition temperature ($RT_{ndt}$) across the entire pressure vessel wall thickness at a preselected critical location in said wall ;
   generating as a function of transients in said reactor coolant temperature and pressure signals, a visual representation of the real time required $RT_{ndt}$, across the entire pressure vessel wall thickness at said selected critical location, said required $RT_{ndt}$ being the $RT_{ndt}$ that would be required in the pressure vessel wall for flaw initiation to occur as a result of stresses set-up by said transients ; and

superimposing said visual representations of the real-time actual and required $RT_{ndt}$'s for flaw initiation across the entire pressure vessel wall thickness for the selected critical location to generate a visual representation of the difference in value between the actual and required $RT_{ndt}$ presented as an $RT_{ndt}$ margin.

7. The method of claim 6 characterized by the steps of monitoring the $RT_{ndt}$ margin and when the required $RT_{ndt}$ at any depth through the vessel wall falls below the actual $RT_{ndt}$ at that depth, indicating that a flaw at that depth would propagate, generating on a real time basis as a function of the transients in the reactor coolant temperature and pressure signals, a visual representation of the $RT_{ndt}$ required for arrest of the propagation of the flaw, and superimposing the arrest $RT_{ndt}$ on the visual representation of the actual $RT_{ndt}$ and flaw initiation $RT_{ndt}$ to present a visual comparison of the actual $RT_{ndt}$ and the arrest $RT_{nd}$ .

8. The method of claim 6 including the step of operating the reactor to maintain the $RT_{ndt}$ required for flaw initiation above the actual $RT_{ndt}$ across the full thickness of the pressure vessel wall .

9. The method of claim 6 wherein said step of generating the actual $RT_{ndt}$ representation comprises the steps of :

storing signals representative of selected physical characteristics of said pressure vessel at said critical location ; and

generating the actual $RT_{ndt}$ representation as a function of said stored physical characteristics signals and said fast neutron fluence signal.

10. The method of claim wherein the step of generating the required $RT_{ndt}$ representation comprises the steps of :

generating as a function of the reactor coolant temperature and pressure signals, the stored selected physical characteristic signals, and said fast neutron fluence signal, a signal representative of the real time stress intensity factor through the pressure vessel wall and a signal representative of the real time flaw initiation toughness through the pressure vessel wall at the selected critical location ; and

generating the required $RT_{ndt}$ representation through the pressure vessel wall by determining the $RT_{ndt}$s required to make the stress intensity factor signal equal to the flaw initiation toughness signal for all depths through the pressure vessel wall.

11. The method of claim 10 wherein the generation of the real-time stress intensity signal comprises the steps of :

generating from said reactor coolant temperature and pressure signals, signals representative of real-time temperature and pressure distribution through the pressure vessel wall at said critical location ;

generating as a function of said temperature and pressure distribution signals, a signal representative of the distribution of the thermal and pressure stress through the pressure vessel wall ;

sequentially generating signals representative of flaws of incrementally increasing depth across the pressure vessel wall at said critical location ; and

generating said stress intensity factor signal as a function of said thermal and pressure stress distribution signal and said sequentially generated flaw depth signals.

12. The method of claim 11 including additional steps for monitoring and analyzing pressure vessel integrity during reactor heatup and cooldown, said additional steps including the steps of :

monitoring the reactor coolant temperature and pressure signals ; and

when changes in said temperature and pressure signals are, within preselected limits for heatup and cooldown ;

generating heatup/cooldown real time temperature and pressure distribution signals through the pressure vessel at said critical location, using said reactor coolant temperature and pressure signals and, with regard to said pressure signals, a first preselected safety factor signal ;

generating heatup/cooldown thermal and pressure stress distribution signals as a function of said heatup/cooldown temperature and pressure distribution signals ;

generating a heatup/cooldown stress intensity signal as a function of said heatup/cooldown thermal and pressure stress distribution signals for an assumed flaw of preselected dimensions extending outward from the inner surface of said pressure vessel wall at said critical location for cooldown and inward from the outer surface for heatup ;

generating a heatup/cooldown flaw initiation toughness signal from said stored pressure vessel physical characteristic signals, and said fast neutron fluence signal taking into account a second safety factor ;

generating a heatup/cooldown required $RT_{ndt}$ signal by determining the $RT_{ndt}$ which makes said heatup/cooldown stress intensity factor signal for said assumed flaw equal to the heatup/cooldown flaw initiation toughness signal at the depth of the assumed flaw ; and

generating a real-time representation of a comparison between said heatup/cooldown required $RT_{ndt}$ and actual $RT_{ndt}$ signals.

13. The method of claim 12 including the step of operating the nuclear reactor to maintain the required $RT_{ndt}$ substantially equal to the actual $RT_{ndt}$.

14. Apparatus for on-line monitoring and analysis of integrity of nuclear reactor pressure vessel wall (27), across a thickness (29) thereof by temperature measurements in a reactor unit in which reactor coolant is circulated along the inner wall of the pressure vessel, said apparatus characterized by :

means (21) for measuring on an on-line basis the temperature of the reactor coolant along an inner wall of the pressure vessel from measurements taken at a point spaced from the inner wall of the vessel even under stagnant flow conditions ;

means (15) for measuring on an on-line basis the pressure of the reactor coolant ;

digital computer means (23) for periodically sampling said reactor coolant temperature and pressure measurements and for generating on an on-line basis, as a function of changes over time in the measured temperature and pressure, vessel condition signals representative of the proximity to non-ductile failure of the pressure vessel wall at selected critical locations for all flaw depths through the pressure vessel wall ;

a visual display device (25) ; and

means for applying said vessel condition signals generated by the digital computer to the visual display device to generate an on-line visual representation of the proximity of the pressure vessel wall to non-ductile failure at the critical locations for all flaw depths.

15. The apparatus of claim 14-characterized by :

a reactor core (47) in the reactor pressure vessel having a core inlet at the bottom thereof ; and

cold leg conduit (9) means connected to the pressure vessel near the top of reactor core for introducing into the pressure vessel reactor coolant which circulates down along the inner wall of the pressure vessel and then upward through the core inlet into the reactor core ; and

wherein said means for measuring reactor coolant temperature includes first sensor means for measuring the temperature of the reactor coolant in the cold leg conduit means and second sensor means for measuring reactor coolant temperature in said core inlet and wherein said digital computer means (23) periodically samples the temperature measurements from both said first and second sensor means and when the temperature measurements from the first and second sensor means differ by more than a predetermined amount indicative of stagnant reactor coolant flow, applies stored conversion factors to the measurements from at least one of said sensor means to generate the temperature measurement of the reactor coolant at the inner wall of the pressure vessel for use in generating said vessel condition signals.

16. The apparatus of claim 15 characterized in that said cold leg conduit means includes plurality of cold leg conduits angularly distributed around the reactor pressure vessel, each forming a part of a reactor coolant loop and each having first sensor means therein for measuring the reactor coolant temperature, and wherein said digital computer means (23) compares the reactor coolant temperature measurement from the first sensor means in each cold leg conduit with the temperature measurements from second sensor means substantially vertically aligned therewith to determine a reactor coolant loop temperature for each loop and utilizes the loop temperature which most influences each critical location in the pressure vessel wall for generating the pressure vessel condition signal therefor.

17. The apparatus of claim 16 characterized in that the apparatus includes guide tubes (77) which extend upward through the bottom of the reactor pressure vessel, through the core inlet and into the reactor core, and wherein said second sensor means in said core inlet are located in said guide tubes.

18. The apparatus of claim 17 characterized in that said second sensor means are thermocouples (21) mounted in a plurality of guide tubes (77) distributed across the reactor core in a pattern such that at least two thermocouples provide redundant core inlet temperature measurements for each reactor coolant loop.

## Ansprüche

1. Verfahren zum on-line Überwachen und Untersuchen der unversehrten Zustandes zum Verhindern nicht duktiler Ausfälle über die Wandstärke eines Kernreaktordruckgefässes mittels Temperaturmessungen in einer Anlage in der Reaktorkühlmittel im Betrieb längs einer Innenwand des Druckgefässes strömt wobei das Verfahren die Schritte umfaßt :

– Erzeugen von die gemessene Temperatur des Reaktorkühlmittels angebenden Signalen auf einer on-line Basis, wobei der Schritt des Erzeugens von Temperatursignalen das Messen der Reaktorkühlmitteltemperatur an einer Stelle umfaßt, die von den ausgewählten kritischen Stellen in der Gefäßwand beabstandet ist,

– Erzeugen von den gemessenen Druck des Reaktorkühlmittels angebenden Signalen auf einer on-line Basis,

– Speichern von Umwandlungsfaktoren um die gemessene Temperatur in die Kühlmitteltemperatur umzuwandeln die an den ausgewählten kritischen Stellen im Falle eines stagnierenden Strömungszustandes des Reaktorkühlmittels tatsächlich herrscht,

– Erzeugen von Temperatursignalen für die ausgewählten, kritischen Punkte indem der geeignete Umwandlungsfaktor auf die gemessene Temperatur unter einem stagnierenden Strömungszustand angewendet wird

– Erzeugen weiterer Temperatursignale aus den Temperaturmessungen ohne die Umwandlungsfaktoren und

– Erzeugen auf einer on-line Basis als Funktion der Änderungen der Temperatursignale, der weiteren Temperatursignale und der Drucksignale, einer Sichtdarstellung eines Grenzbereichs für nicht duktile Ausfälle des Gefässes bei den ausgewählten kritischen Stellen für alle Rißtiefen durch die Dicke der Gefäßwand.

2. Verfahren nach Anspruch 1, dadurch **gekennzeichnet** daß das Verfahren die Schritte umfaßt die Reaktorkühlmitteltemperatur an einer ersten Stelle zu messen bevor das Reaktorkühlmittel längs der Innenwand des Druckgefässes strömt und an einer zweiten Stelle nachdem das Reaktorkühlmittel längs der Innenwand des Druckgefässes geströmt ist die Temperaturmessungen an den zwei Stellen zu vergleichen und die geeigneten Umwandlungsfaktoren auf wenigstens eine der Temperaturmessungen anzuwenden,um die Temperatursignale zu erzeugen wenn die zwei Messungen sich um einen vorgewählten Wert der einen stagnierenden Strömungszustand anzeigt unterscheiden.

3. Verfahren nach Anspruch 2 dadurch **gekennzeichnet** daß der Reaktor innerhalb des Druckgefässes einen Reaktorkern mit einem Kerneintritt an seinem Boden und einen kalten Leitungszweig aufweist durch den Reaktorkühlmittel in das Druckgefäß nahe der Kernoberkante eintritt längs der Innenwand des Druckgefässes nach unten strömt und durch den Kerneintritt in den Kern gelangt und daß die erste Temperaturmessung an dem kalten Leitungszweig und die zweite Temperaturmessung an dem Kerneintritt erfolgt.

4. Verfahren nach Anspruch 3 dadurch **gekennzeichnet** daß die Temperatursignale aus dem Mittel zwischen der ersten und der zweiten Temperaturmessung erzeugt werden wenn sich die Messungen um weniger als den vorgewählten Wert unterscheiden.

5. Verfahren nach Anspruch 3 dadurch **gekennzeichnet** daß der Reaktor eine Vielzahl von Reaktorkühlmittelschleifen umfaßt von denen jede einen kalten Leitungszweig aufweist und daß das Verfahren umfaßt eine erste Temperaturmessung für jede Schleife an dem zugeordneten kalten Leitungszweig und eine zweite Temperaturmessung für jede Schleife an dem Kerneintritt unter dem zugeordneten kalten Leitungszweig vorzunehmen daß das Verfaren ferner den Schritt umfaßt die Temperaturmessungen vorauszuwählen um das Temperatursignal für einen ausgewählten kritischen Punkt von der Schleife zu erzeugen die die größte Wirkung auf die Temperatur an der ausgewählten Stelle besitzt.

6. Verfahren anch Anspruch 1 dadurch **gekennzeichnet** daß der Schritt des Erzeugens von Temperatursignalen für die kritischen Stellen umfaßt :

– Erzeugen eines Signals welches die schnelle Neutronenfluenz darstellt welcher das Reaktordruckgefäß ausgesetzt worden ist ;

– Erzeugen einer Sichtdarstellung der tatsächlichen RealzeitVersprödungsübergangsbezugstemperatur ($RT_{ndt}$) über die gesamte Druckgefäßwandstärke an einer vorausgewählten kritischen Stelle der Wand als Funktion des Fluenzsignals ;

– Erzeugen als Funktion von Transienten der Reaktorkühlmitteltemperatur- und Drucksignale einer Sichtdarstellung der echtzeit-benötigten $RT_{ndt}$ über die gesamte Druckgefäßwandstärke bei der ausgewählten kritischen Stelle wobei die benötigte $RT_{ndt}$ diejenige $RT_{ndt}$ ist die in der Druckgefäßwand erforderlich wäre damit Anfangsrisse als ein Ergebnis von durch die Transienten hervorgerufenen Spannungen auftreten ; und

– Überlagern der Sichtdarstellungen der in Echtzeit tatsächlich auftretenden und der für eine Anfangsrißbildung benötigten $RT_{ndt}$s über die gesamte Druckgefäßwandstärke für die ausgewählte kritische Stelle um eine Sichtdarstellung des Unterschiedes hinsichtlich des Wertes zwischen der tatsächlichen und benötigten $RT_{ndt}$ zu erzeugen der als ein $RT_{ndt}$ Grenzwert dargestellt wird.

7.Verfahren nach Anspruch 6 **gekennzeichnet** durch die Schritte des Überwachens des $RT_{ndt}$ Grenzwertes und der Angabe wenn die benötigte $RT_{ndt}$ bei jeder Tiefe durch die Gefäßwand unter die tatsächliche $RT_{ntd}$ bei dieser Tiefe fällt daß sich ein Riß in dieser Tiefe fortpflanzen würde des Erzeugens auf einer Echtzeitbasisals Funktion der Transienten bei den Reaktorkühlmitteltemperatur- und Drucksignalen, einer Sichtdarstellung der zum Anhalten der Rißausbreitung benötigten $RT_{ndt}$ und des Überlagerns der zum Anhalten benötigten $RT_{ndt}$ auf die Sichtdarstellung der tatsächlichen $RT_{ndt}$ und der $RT_{ndt}$ für die Anfangsrißbildung um einen sichtbaren Vergleich der tatsachlichen $RT_{ndt}$ und der $RT_{ndt}$ zum Anhalten anzugeben.

8. Verfahren nach Anspruch 6 dadurch **gekennzeichnet** daß das Verfahren den Schritt enthält den Reaktor so zu betreiben daß die $RT_{ndt}$ die zur Anfangsrißbildung benötigt wird oberhalb der tatsächlichen $RT_{ndt}$ über die gesamte Dicke der Druckgefäßwand aufrecterhalten wird.

9. Verfahren nach Anspruch 6 dadurch **gekennzeichnet** daß der Schritt des Erzeugens der tatsächlichen RTndt-Darstellung die folgenden Schritte umfaßt :

– Speichern von Signalen die ausgewählte physikalische Merkmale des Druckgefässes bei den kritischen Stellen angeben ; und

– Erzeugen der Darstellung der tatsächlichen $RT_{ndt}$ als eine Funktion der gespeicherten physikalischen Merkmalssignale und des Fluenzsignals der schnellen Neutronen.

10. Verfahren nach Anspruch 9 dadurch **gekennzeichnet** daß der Schritt des Erzeugens der Darstellung der benötigten $RT_{ndt}$ die folgenden Schritte umfaßt :

– Erzeugen, als Funktion der Reaktorkühlmitteltemperatur- und Drucksignale der gespeicherten ausgewählten physikalischen Merkmalssignale und des Fluenzsignals für schnelle Neutronen, eines Signals welches den Echtzeit-Spannungsfaktor durch die Druckgefäßwand darstellt und eines Signales welches die RealzeitAnfangsrißfestigkeit durch die Druckgefäßwand an der ausgewählten kritischen Stelle angibt ; und

– Erzeugen der Darstellung der benötigten $RT_{ndt}$ durch die Druckgefäßwand hindurch indem die $RT_{ndt}$s bestimmt werden die erforderlich sind damit das Spannungsintensitätsfaktorsignal gleich dem Anfangsrißbildungsfestigkeitssignal für alle Tiefen durch die Druckgefäßwand hindurch ist.

11. Verfahren nach Anspruch 10 dadurch **gekennzeichnet** daß das Erzeugen des Echtzeit-Spannungsintensitätssignals die Schritte umfaßt :

– Erzeugen von Signalen, die die Echtzeit-Temperatur- und Druckverteilung an der kritischen Stelle durch die Druckgefäßwand hindurch darstellen aus den Reaktorkühlmitteltemperatur- und Drucksignalen ;

– Erzeugen als Funktion der Temperatur- und Druckverteilungssignale ein Signal welches die Verteilung der Wärme- und Druckspannung über die Druckgefäßwand darstellt ;

– aufeinanderfolgendes Erzeugen von Signalen die Risse mit schrittweise zunehmender Tiefe durch die Druckgefäßwand hindurch bei der kritischen Stelle darstellen ; und

– Erzeugen des Spannungsintensitätsfaktorsiganls als Funktion des Wärme- und Druckspannungsverteilungssignals und der aufeinanderfolgend erzeugten Rißtiefensignale.

12. Verfahren nach Anspruch 11, dadurch **gekennzeichnet** daß es zusätzliche Schritte zum Überwachen und Untersuchen des unversehrten Zustandes des Druckgefässes während des Hoch- und Abfahrens des Reaktors umfaßt wobei die zusätzlichen Schritte die folgenden Schritte enthalten :

– Überwachen der Reaktorkühlmitteltemperatur- und Drucksignale ; und

– wenn die Änderungen der Temperatur- und Drucksignale innerhalb vorausgewählter Grenzen zum Hoch- und Abfahren liegen Erzeugen von Hochfahr-/Abfahr-Echtzeit-Temperatur- und Druckverteilungssignalen durch das Druckgefäß hindurch an der kritischen Stelle unter Verwendung der Reaktorkühlmitteltemperatur- und Drucksignale und Erzeugen eines ersten vorausgewählten Sicherheitsfaktorsignals in Bezug auf die Drucksignale ;

– Erzeugen von Hochfahr-/Abfahr-Wärme- und Druckspannungsverteilungssignalen als Funktion der Hochfahr-/Abfahrtemperatur- und Druckverteilungssignale ;

– Erzeugen eines Hochfahr-/Abfahr-Spannungsintensitätssignals als Funktion der Hochfahr-/Abfahr-Wärme- und Druckspannungsverteilungssignale für einen angenommenen Riß vorausgewählter Abmessungen der sich von der inneren Oberfläche der Druckgefäßwand an der kritischen Stelle beim Abfahren nach außen und von der äußeren Oberfläche beim Hochfahren nach innen erstreckt ;

– Erzeugen eine Hochfahr-/Abfahr-Anfangsrißbildungsfestigkeitssignals aus den für das Druckgefäß gespeicherten physikalischen Merkmalssignalen und des Fluenzsignals für schnelle Neutronen unter Berücksichtigung eines zweiten Sicherheitsfaktors ;

– Erzeugen eines Signals für die benötigte $RT_{ndt}$ beim Hoch- und Abfahren indem die $RT_{ndt}$ bestimmt wird bei der das Hoch-fahr-/Abfahr-Spannungsintensitätsfaktorsignal für den angenommenen Riß gleich dem Hochfahr-/Abfahr-Anfangsrißbildungsfestigkeits signal bei der Tiefe des angenommenen Risses wird ; und

– Erzeugen einer Echtzeit-Darstellung eines Vergleiches zwischen der benötigten $RT_{ndt}$ beim Hoch- und Abfahren und dem tatsächlichen $RT_{ndt}$ Signal.

13. Verfahren nach Anspruch 12 **gekennzeichnet** durch den Schritt des Betreibens des Kernreaktors in der Weise daß die benötigte $RT_{ndt}$ im wesentlichen gleich der tatsächlichen $RT_{ndt}$ gehalten wird.

14. Vorrichtung zum on-line Überwachen und Untersuchen des unversehrten Zustandes der Druckgefäßwand (27) eines Kernreaktors über deren Stärke (29) mittels Temperaturmessungen in einer Reaktoranlage in der Reaktorkühlmittel längs der inneren Wand des Druckgefässes strömt **gekennzeichnet** durch :

– eine Einrichtung (21) zum on-line Messen der Temperatur des Reaktorkühlmittels längs der Innenwand des Druckgefässes aufgrund von Messungen die an einer von der inneren Wand des Druckgefässes beabstandeten Stelle selbst bei einem stagnierenden Strömungszustand durchgeführt werden ;

– eine Einrichtung (15) zum on-line Messen des Druckes des Reaktorkühlmittels ;

– eine digitale Rechnereinrichtung (23) um periodisch die Reaktorkühlmitteltemperatur- und Druckmessungen abzutasten und um auf on-line Basis als Funktion der zeitlichen Änderungen der gemessenen Temperatur und des gemessenen Drucks Gefäßzustandssignale zu erzeugen die die Nähe zu einem nicht duktilen Ausfall der Druckgefäßwand an den ausgewählten kritischen Stellen für alle Rißtiefen durch die Druckgefäßwand hindurch angeben ;

– eine Sichtanzeigeeinrichtung (25) ; und

– eine Einrichtung um die von dem digitalen Rechner erzeugten Gefäßzustandssignale an die Sichtanzeigeeinrichtung anzulegen um eine on-line Sichtdarstellung der Nähe der Druckgefäßwand zu einem nicht duktilen Ausfall an den kritischen Stellen für alle Rißtiefen zu erzeugen.

15. Vorrichtung nach Anspruch 14 gekennzeichnet durch :

– einen sich in dem Reaktordruckgefäß befindenden Reaktorkern (47) der einen Kerneintritt an seinem Boden aufweist ; und

– eine kalte Leitungszweigeinrichtung (9) die nahe der Reaktorkernoberkante mit dem Druckgefäß zum Einführen von Reaktorkühlmittel in das Druckgefäß verbunden ist wobei das Kühlmittel nach unten längs der inneren Wand des Druckgefässes und dann nach oben durch den Kerneintritt in den Reaktorkern strömt ; und

– wobei die Einrichtung zum Messen der Reaktorkühlmitteltemperatur eine erste Fühlereinrichtung zum Messen der Reaktorkühlmitteltemperatur in der kalten Leitungszweigeinrichtung und eine zweite Fühlereinrichtung zum Messen der Reaktorkühlmitteltem peratur im Kerneintritt aufweist und wobei die digitale Rechnereinrichtung (23) periodisch die Temperaturmessungen sowohl von der ersten als auch von der zweiten Fühlereinrichtung abtastet und dann wenn die Temperaturmessungen von der ersten und der zweiten Fühlereinrichtung um mehr als einen vorbestimmten Wert abweichen der eine stagnierende Reaktorkühlmittelströmung anzeigt gespeicherte Umwandlungsfaktoren auf die Messungen von wenigstens einer der Fühlereinrichtungen anwendet um die Temperaturmessung des Reaktorkühlmittels an der Innenwand des Druckgefässes zu gewinnen zur Verwendung bei der Erzeugung der Gefäßzustandssignale.

16. Vorrichtung nach Anspruch 15 dadurch gekennzeich net daß die kalte Leitungszweigeinrichtung eine Vielzahl von winkelmäßig um das Reaktordruckgefäß herum verteilte kalte Leitungszweige umfaßt von denen jeder einen Teil einer Reaktorkühlmittelschleife bildet und in sich eine erste Fühlereinrichtung zum Messen der Reaktorkühlmitteltemperatur aufweist und daß die digitale Rechnereinrichtung (23) die Reaktorkühlmitteltemperaturmessung von der ersten Fühlereinrichtung in jedem kalten Leitungszweig mit den Temperaturmessungen von der zweiten Fühlereinrichtung die im wesentlichen senkrecht zu jener ausgerichtet ist vergleicht um eine Reaktorkühlmittelschleifentemperatur für jede Schleife zu bestimmen und diejenige Schleifentemperatur die am stärksten jede kritische Stelle in der Druckgefäßwand beeinflußt verwendet um das Druckgefäßzustandssignal zu erzeugen.

17. Vorrichtung nach Anspruch 16 dadurch gekennzeichnet daß die Vorrichtung Führungsrohre (77) umfaßt die sich nach oben durch den Boden des Reaktordruckgefässes, durch den Kerneintritt und in den Reaktorkern erstrecken und daß die zweiten Fühlereinrichtungen in dem Kerneintritt in den Führungsrohren angeordnet sind.

18. Vorrichtung nach Anspruch 17 dadurch gekennzeichnet daß die zweiten Fühlereinrichtungen Thermoelemente (21) sind die in einer Vielzahl von Führungsrohren (77) angebracht sind die über den Reaktorkern in einem solchen Muster verteilt sind daß wenigstens zwei Thermoelemente redundante Kerneintritttemperaturmessungen für jede Reaktorkühlmittelschleife liefern.

## Revendications

1. Procédé de contrôle et d'analyse de l'intégrité en fonctionnement en ce qui concerne les défauts nonductiles d'une paroi de cuve sous pression de réacteur nucléaire dans l'épaisseur de celle-ci par des mesures de température dans une unité dans laquelle le caloporteur de réacteur utilisé circule le long d'une paroi intérieure de la cuve sous pression ledit procédé comportant les étapes suivantes

– génération de signaux représentatifs de la température mesurée du caloporteur de réacteur sur une base en fonctionnement dans laquelle l'étape de génération de signaux de température comporte la mesure de la température du caloporteur de réacteur en un point espacé des points critiques sélectionnés dans la paroi de la cuve.

– génération de signaux représentatifs de la pression mesurée du caloporteur de réacteur sur une base en service.

– mémorisation de facteurs de conversion pour convertir la température mesurée en une température de caloporteur réelle auxdits points critiques sélectionnés dans une condition de débit stagnant de caloporteur de réacteur,

– génération de signaux de température pour lesdits points critiques sélectionnés en appliquant le facteur de conversion approprié à ladite température mesurée dans des conditions de débit stagnant

– génération d'autres signaux de température à partir des mesures de température sans qu'il y ait d'autres facteurs de conversion et

– génération sur une base en service en fonction de changement desdits signaux de température desdits autres signaux de température et de ladite pression d'une representation visuelle d'une marge de défaillance non-ductile de la cuve auxdits points critiques pour toutes les profondeurs de défaut dans l'épaisseur de la paroi de la cuve

2. Procédé de la revendication 1 **caractérisé** en ce que le procédé comporte les étapes de mesure de la température du caloporteur de réacteur en un premier emplacement avant que le caloporteur de réacteur circule le long de la paroi intérieure de la cuve sous pression et en un deuxième emplacement après que le caloporteur de réacteur ait circulé le long de la paroi intérieure de la cuve sous pression de comparaison des mesures de température auxdits deux emplacements et d'application desdits facteurs de conversion appropriés à au moins une desdites mesures de température afin de générer lesdits signaux de température lorsque les deux mesures diffèrent d'une valeur présélectionnée indicative de conditions de débit stagnant.

3. Procédé de la revendication 2 **caractérisé** en ce que le réacteur comporte un coeur de réacteur à l'intérieur de la cuve sous pression avec un orifice d'entrée de coeur à la base de celui-ci et un conduit de branche froide à travers lequel le caloporteur de réacteur entre dans la cuve sous pression au voisinage du sommet du coeur de réacteur circule vers le bas le long de la paroi intérieure de la cuve sous pression et traverse l'orifice d'entrée du coeur pour aller dans le coeur, et dans lequel ladite première mesure de température est prise dans ledit conduit de branche froide et la deuxième mesure de température est prise à l'orifice d'entrée du coeur.

4. Procédé de la revendication 3 **caractérisé** en ce que lesdits signaux de température sont générés à partir de la moyenne entre les première et deuxième mesures de température lorsque lesdites mesures diffèrent de moins de ladite valeur présélectionnée.

5. Procédé de la revendication 3 caractérisé en ce que ledit réacteur a une pluralité de boucles de caloporteur de réacteur comportant chacune un conduit de branche froide et dans lequel ledit procédé comporte la réalisation d'une première mesure de température pour chaque boucle dans le conduit de branche froide associé et la réalisation d'une deuxième mesure de température pour chaque boucle au niveau de l'orifice d'entrée du coeur sous le conduit de branche froide associé et dans lequel ledit procédé comporte de plus l'étape de présélection des mesures de température pour générer le signal de température pour un point critique sélectionné. à partir de la boucle qui a la plus grande influence sur la température au point sélectionné

6. Procédé selon la revendication 1, dans lequel ladite étape de génération de signaux de température pour lesdits points critiques comporte :

– la génération d'un signal représentatif d'une fluence de neutrons rapides à laquelle a été soumise la cuve de réacteur sous pression ;

– la générationn en fonction dudit signal de fluence, d'une représentation visuelle de la température de transition de ductilité nulle de référence en temps réel ($RT_{ndt}$) sur toute l'épaisseur de paroi de la cuve sous pression en un emplacement critique présélectionné dans ladite paroi:

– la générationn en fonction de transitoires dans lesdits signaux de pression et de température de caloporteur de réacteur d'une représentation visuelle de $RT_{ndt}$ voulue en temps réel, dans toute l'épaisseur de la paroi de la cuve sous pression audit emplacement critique sélectionné ladite $RT_{ndt}$ voulue étant la $RT_{ndt}$ qui sera nécessaire dans la paroi de la cuve sous pression pour qu'il se produise le démarrage d'un défaut en conséquence d'efforts provoqués par lesdits transitoires ; et

– la superposition desdites représentations visuelles des $RT_{ndt}$ en temps réel effectives et voulues pour la production de défauts dans la totalité de l'épaisseur de la paroi de la cuve sous pression pour l'emplacement critique sélectionné de façon à générer une représentation visuelle de la différence de valeur entre les $RT_{ndt}$ effectives et voulues présentée sous la forme d'une marge de $RT_{ndt}$.

7. Procédé de la revendication 6 **caractérisé** par les étapes de contrôle de la marge de $RT_{ndt}$ et lorsque la $RT_{ndt}$ à n'importe quelle profondeur dans la paroi de la cuve se trouve en dessous de la $RT_{ndt}$ effective à cette profondeur. d'indication qu'un défaut à cette profondeur se propagera, de génération sur une base en temps réel en fonction des transitoires dans les signaux de pression et de température du caloporteur de réacteur d'une représentation visuelle de la $RT_{ndt}$ voulue pour l'arrêt de la propagation du défaut et de superposition de la $RT_{ndt}$ d'arrêt sur la représentation visuelle de la $RT_{ndt}$ effective et de la $RT_{ndt}$ de production de défaut afin de présenter une comparaison visuelle de la $RT_{ndt}$ effective et de la $RT_{ndt}$ d'arrêt.

8. Procédé de la revendication 6 comprenant l'étape d'utilisation du réacteur pour maintenir la $RT_{ndt}$ voulue pour la production de défaut au-dessus de la $RT_{ndt}$ effective sur toute l'épaisseur de la paroi de la cuve sous pression.

9. Procédé de la revendication 6, dans lequel ladite étape de génération de la représentation de la $RT_{ndt}$ réelle comporte les étapes suivantes :

– mémorisation de signaux représentatifs des caractéristiques physiques sélectionnées de ladite cuve sous pression audit emplacement critique ; et

– génération de la représentation de la RT$_{ndt}$ réelle en fonction desdits signaux de caractéristiques physiques mémorisés et dudit signal de fluence de neutrons rapides.

10. Procédé de la revendication 9 dans lequel l'étape de génération de la représentation de la RT$_{ndt}$ voulue comporte les étapes suivantes :

– la génération, en fonction des signaux de pression et de température de caloporteur de réacteur des signaux de caractéristiques physiques sélectionnés mémorisés et dudit signal de fluence de neutrons rapides, d'un signal représentatif du facteur d'intensité de contraintes en temps réel dans la paroi de la cuve sous pression et d'un signal représentatif de la résistance à la production de défauts en temps réel dans la paroi de la cuve sous pression à l'emplacement critique sélectionné ; et

– la génération de la représentation de la RT$_{ndt}$ voulue dans la paroi de la cuve sous pression en déterminant les RT$_{ndt}$ voulues pour rendre le signal de facteur d'intensité de contraintes égal au signal de résistance à la production de défauts pour toutes les profondeurs dans la paroi de la cuve sous pression.

11. Procédé de la revendication 10, dans lequel la génération du signal d'intensité de contraintes en temps réel comporte les étapes suivantes :

– la génération à partir desdits signaux de pression et de température de caloporteur de réacteur de signaux représentatifs d'une distribution de pression et de température en temps réel dans la paroi de la cuve sous pression audit emplacement critique ;

– la génération en fonction desdits signaux de distribution de pression et de température, d'un signal représentatif de la distribution des contraintes thermiques et de pression dans la paroi de la cuve sous pression ;

– la génération séquentielle de signaux représentatifs de défauts de profondeur augmentant par incrément dans la paroi de la cuve sous pression audit emplacement critique : et

– la génération dudit signal de facteur d'intensité de contraintes en fonction dudit signal de distribution de contraintes de pression et thermiques et desdits signaux de profondeur de défauts générés séquentiellement.

12. Procédé de la revendication 11 comprenant des étapes additionnelles pour contrôler et analyser l'intégrité de la cuve sous pression durant le chauffage et le refroidissement du réacteur, lesdites étapes additionnelles comprenant les étapes suivantes :

– le contrôle des signaux de pression et de température du caloporteur de réacteur ; et

– lorsque les changements dans lesdits signaux de température et de pression sont à l'intérieur de limites présélectionnées pour le chauffage et le refroidissement :

– la génération de signaux de distribution de pression et de température en temps réel de chauffage et de refroidissement dans la cuve sous pression audit emplacement critique en utilisant lesdits signaux de pression et de température du caloporteur de réacteur, et en ce qui concerne lesdits signaux de pression un premier signal de facteur de sécurité présélectionné ;

– la génération de signaux de distribution de contraintes de pression et thermiques de chauffage et de refroidissement en fonction desdits signaux de distribution de pression et de température de chauffage et de refroidissement ;

– la génération d'un signal d'intensité de contraintes de chauffage et de refroidissement en fonction desdits signaux de distribution de contraintes de pression et thermiques de chauffage et de refroidissement pour un défaut supposé de dimensions présélectionnées s'étendant vers l'extérieur à partir de la surface intérieure de ladite paroi de cuve sous pression audit emplacement critique pour le refroidissement et vers l'intérieur à partir de la surface extérieure pour le chauffage ;

– la génération d'un signal de résistance à la création de défauts pendant le chauffage et le refroidissement à partir desdits signaux de caractéristiques physiques de la cuve sous pression mémorisés, et dudit signal de fluence de neutrons rapides en prenant en compte un deuxième facteur de sécurité ;

– la génération d'un signal de RT$_{ndt}$ voulue pour le chauffage et le refroidissement en déterminant la RT$_{ndt}$ qui établit ledit signal de facteur d'intensité de contraintes de chauffage et de refroidissement pour ledit défaut supposé égal au signal de résistance à la création de défaut au chauffage et au refroidissement à la profondeur du défaut supposé ; et

– la génération d'une représentation en temps réel d'une comparaison entre lesdits signaux de RT$_{ndt}$ réelle et de RT$_{ndt}$ voulue au chauffage et au refroidissement.

13. Procédé de la revendication 12 comportant l'étape de fonctionnement du réacteur nucléaire pour maintenir la RT$_{ndt}$ voulue substantiellement égale à la RT$_{ndt}$ réelle.

14. Appareil pour un contrôle et une analyse de l'intégrité de la paroi (27) de la cuve sous pression de réacteur nucléaire en fonctionnement, sur une épaisseur (29) de celle-ci grâce à des mesures de température dans une unité de réacteur dans laquelle le caloporteur de réacteur circule le long de la paroi intérieure de la cuve sous pression, ledit appareil étant caractérisé par :

– des moyens (21) pour mesurer, sur une base en fonctionnement, la température du caloporteur de réacteur le long d'une paroi intérieure de la cuve sous pression à partir de mesures prises en un point espacé de la paroi intérieure de la cuve même dans des conditions de flux stagnant ;

– des moyens (15) pour mesurer sur une base en fonctionnement, la pression du caloporteur de réacteur ;

– des moyens formant ordinateur numérique (23) pour échantillonner périodiquement lesdites mesures de pression et de température de caloporteur de réacteur et pour générer, sur une base en fonctionnement en fonction de changements dans le temps de la pression et la température mesurées, des signaux d'état de cuve représentatifs de la proximité de défaillances non-ductiles de la paroi de la cuve sous pression en des emplacements critiques sélectionnés pour toutes les profondeurs de défauts dans la paroi de la cuve sous pression ;

– un dispositif de visualisation visuel (25) ; et

– des moyens pour appliquer lesdits signaux d'état de cuve générés par l'ordinateur numérique au dispositif de visualisation visuel afin de générer une représentation visuelle en fonctionnement de la proximité de la paroi de la cuve sous pression par rapport à une défaillance non-ductile aux emplacements critiques pour toutes les profondeurs de défauts.

15. Appareil de la revendication 14 **caractérisé** par :

– un coeur de réacteur (47) dans la cuve sous pression de réacteur, ayant un orifice d'entrée de coeur à la base de celui-ci ; et

– des moyens formant conduit (9) de branche froide connectés à la cuve sous pression au voisinage du sommet du coeur de réacteur pour introduire dans la cuve sous pression du caloporteur de réacteur qui circule vers le bas le long de la paroi intérieure de la cuve sous pression puis vers le haut à travers l'orifice d'entrée du coeur dans le coeur de réacteur ; et

– dans lequel lesdits moyens pour mesurer la température de caloporteur de réacteur comportent des premiers moyens formant détecteurs pour 'mesurer la température du caloporteur de réacteur dans les moyens formant conduit de branche froide et des deuxièmes moyens formant détecteurs pour mesurer la température du caloporteur de réacteur dans ledit orifice d'entrée de coeur et dans lequel lesdits moyens formant ordinateur numérique (23) échantillonnent périodiquement les mesures de température venant desdits premiers et deuxièmes moyens formant détecteurs et lorsque les mesures de température des premiers et deuxièmes moyens formant détecteurs diffèrent de plus d'une valeur prédéterminée indicative d'un flux de caloporteur de réacteur stagnant, appliquent des facteurs de conversion mémorisés aux mesures d'au moins l'un desdits moyens formant détecteurs afin de générer la mesure de température du caloporteur de réacteur au niveau de la paroi intérieure de la cuve sous pression pour qu'elle soit utilisée pour générer lesdits signaux d'état de cuve.

16. Appareil de la revendication 15 **caractérisé** en ce que lesdits moyens formant conduits de branche froide comportent une pluralité de conduits de branche froide distribués de façon angulaire autour de la cuve sous pression de réacteur, chacun formant une partie d'une boucle de caloporteur de réacteur et chacun ayant des premiers moyens formant détecteurs à l'intérieur de celle-ci pour mesurer la température du caloporteur de réacteur et dans lequel lesdits moyens formant ordinateur numérique (23) comparent la mesure de la température du caloporteur de réacteur des premiers moyens formant détecteurs dans chaque conduit de branche froide avec les mesures de température des deuxièmes moyens formant détecteurs alignés substantiellement verticalement avec ceux-ci de façon à déterminer une température de boucle de caloporteur de réacteur pour chaque boucle et utilisent la température de la boucle qui influence le plus chaque emplacement critique dans la paroi de cuve sous pression pour générer le signal d'état de cuve sous pression à partir de celle-ci.

17. Appareil selon la revendication 16, **caractérisé** en ce que l'appareil comporte des tubes de guidage (77) qui s'étendent vers le haut à travers la base de la cuve de réacteur sous pression à travers l'orifice d'entrée de coeur, et dans le coeur de réacteur, et dans lequel lesdits deuxièmes moyens formant détecteur dans ledit orifice d'entrée de coeur sont situés dans lesdits tubes de guidage.

18. Appareil de la revendication 17, **caractérisé** en ce que lesdits deuxièmes moyens formant détecteurs sont des thermocouples (21) montés dans une pluralité de tubes de guidage (77) distribués dans le coeur de réacteur selon un motif tel qu'au moins deux thermocouples délivrent des mesures de température d'orifice d'entrée de coeur redondantes pour chaque boucle de caloporteur de réacteur.

FIG. I

EP 0 204 212 B1

FIG. 2

FIG. 3

FIG. 4

FIG. 5

FIG. 6

FIG. 7

FIG.8

FIG. 9   Fractional Distance Through Wall

FIG. 10   Fractional Distance Through Wall

FIG. 11   Fractional Distance Through Wall